# EUROPÄISCHE PATENTANMELDUNG

(11) **EP 4 491 936 A1**
(43) Veröffentlichungstag der Anmeldung: **15.01.2025**
(21) Anmeldenummer: 24186425.5
(22) Anmeldetag: 04.07.2024
(51) Int. Cl.: F17C 13/02, G01F 23/00, G01F 23/22, G01F 22/00

(54) **VORRICHTUNG ZUR INDIREKTEN MESSUNG DES FÜLLSTANDS EINER UNTER DRUCK STEHENDEN FLÜSSIGKEIT IN EINEM FLUIDBEHÄLTER SOWIE VERFAHREN**

(30) Priorität: 14.07.2023 DE 102023206710
(71) Anmelder: BLANCO GmbH + Co KG, 75038 Oberderdingen (DE)
(72) Erfinder: Zöllner, Thomas, 42369 Wuppertal (DE); Schmidt, Kay, 75038 Flehingen (DE)
(74) Vertreter: Ullrich & Naumann PartG mbB

(57) **Zusammenfassung**

Die Erfindung betrifft eine Vorrichtung zur indirekten Messung des Füllstands einer unter Druck stehenden Flüssigkeit in einem Fluidbehälter, insbesondere in Form eines Flüssiggasbehälters, umfassend
ein Anschlussstück und/oder ein mit dem Anschlussstück verbindbares Leitungsstück, wobei das Anschlussstück und/oder das Leitungsstück mit einem Anschluss des Fluidbehälters verbindbar ist, und mit dem Gas aus dem Fluidbehälter entnehmbar ist, wobei das Anschlussstück und/oder das Leitungsstück einen Fluidkanal aufweist, an oder in dem zumindest ein Temperatursensor zur Messung der Temperatur eines Fluids in dem Fluidkanal angeordnet ist, und
eine Füllstandermittlungseinrichtung, die mit dem Temperatursensor verbunden ist und die ausgebildet ist, beim Entnahmevorgang aus dem Fluidbehälter über eine vorgebbare Zeitspanne den Temperaturverlauf des entnommenen Fluids in dem Fluidkanal mittels des zumindest einen Temperatursensors zu messen und anhand des gemessenen Temperaturverlaufs den Füllstand der Flüssigkeit in dem Fluidbehälter zu ermitteln.

## Beschreibung

Die Erfindung betrifft eine Vorrichtung zur indirekten Messung des Füllstands einer unter Druck stehenden Flüssigkeit in einem Fluidbehälter.

Die Erfindung betrifft weiter ein Verfahren zur indirekten Messung des Füllstands einer unter Druck stehenden Flüssigkeit in einem Fluidbehälter.

Die Erfindung betrifft weiter ein Fluidsystem, umfassend eine Vorrichtung zur indirekten Messung des Füllstands einer unter Druck stehenden Flüssigkeit in einem Fluidbehälter und einen Fluidbehälter.

Obwohl allgemein auf beliebige Fluide, insbesondere Flüssiggase, anwendbar, wird die vorliegende Erfindung in Bezug auf CO₂-Flüssiggasbehälter erläutert.

CO₂-Kartuschen oder -Flüssiggasbehälter werden beispielsweise im Küchenbereich zur Karbonisierung von Wasser verwendet, um "Sprudel" herzustellen. Hierzu werden diese in einem Unterschrank an eine entsprechende Leitung für eine Karbonisierungseinrichtung angeschlossen. Mittels einer entsprechenden Sanitärarmatur können diese dann durch einen Nutzer ausgegeben werden. Der CO₂-Flüssiggasbehälter enthält dabei üblicherweise flüssiges CO₂.

Da die CO₂-Flüssiggasbehälter für den Küchenbereich - je nach Nutzungsverhalten - häufig gewechselt werden müssen, ist es für einen Nutzer wichtig, den aktuellen Füllstand zu kennen. Zur Ermittlung des Füllstands ist es bekannt geworden, das verbleibende flüssige CO₂ anhand eines aus Tests bekannten Verbrauchs zu ermitteln unter Berücksichtigung einer Sicherheitsreserve. Nachteilig dabei ist jedoch, dass der CO₂-Behälter einem Nutzer als "leer" angezeigt wird, obwohl dieser noch CO₂ enthält. Ein weiterer Nachteil ist, dass bei Verwendung eines neuen, jedoch nur teilweise gefüllten Behälters, ein zu hoher Füllstand ermittelt wird, sodass der CO₂-Flüssiggasbehälter bereits leer ist, obwohl die Anzeige einen noch teilweise gefüllten Behälter anzeigt. Dies ist für einen Nutzer ärgerlich, da er häufig nicht rechtzeitig für Ersatz sorgen kann. Für Flüssiggasbehälter in anderen Anwendungsbereichen kommen akustische Messungen, sowie Temperaturmessungen an der Behälterwandung und Gewichtsmessungen zum Einsatz.

Eine Gewichtsmessung wird vor allem in Abfüllanlagen verwendet und ist aufgrund der Kosten und des mechanischen Aufwandes im Küchenbereich jedoch nachteilig.

Eine akustische Messung hat insbesondere den Nachteil, dass der akustische Messkopf für eine ausreichende akustische Kopplung sehr fest an die Behälterwand angedrückt sein muss. Ein weiterer Nachteil ist, dass eine solche Messung lediglich angeben kann, ob sich an der gemessenen Stelle noch Flüssigkeit oder Gas in dem Behälter befindet. Für eine Anzeige mit mehreren Zwischenschritten/-füllständen sind somit mehrere Messköpfe notwendig. Die akustische Messung hat auch den Nachteil, dass sie prinzipbedingt mit Aluminiumbehältern und mit kleinen Volumina ungenaue Messergebnisse liefert. Auch muss der akustische Messkopf direkt auf der Oberfläche des aus Metall hergestellten Behälters angeordnet werden. Aufkleber und Folien stören die akustische Messung, sodass dieses Verfahren für die üblicherweise im Haushalts- oder Küchenbereich verwendeten, kleinen Flüssiggasbehälter ungeeignet ist.

Die thermische Messung an der flachen Außenwand kann auch nur punktuell anzeigen, ob an der Messstelle Flüssigkeit oder Gas enthalten ist. Ein weiterer Nachteil ist, dass eine Messung nur bei ausreichender Entnahme von Gas erfolgen kann, da sich der Behälter hierfür durch die Entnahme spürbar abkühlen muss. Auch hier ist eine gute Ankopplung des Temperatursensors an der Außenwand notwendig.

Weitere bekannte Vorrichtungen und Verfahren sind beispielsweise aus der US 3,161,050 A oder der CN 107218983 A bekannt geworden.

Eine Aufgabe der vorliegenden Erfindung ist es daher, eine genauere, kostengünstige und gleichzeitig flexiblere Vorrichtung zur Ermittlung des Füllstands eines Fluidbehälters anzugeben, die eine höhere Nutzerzufriedenheit ermöglicht sowie ein entsprechendes Verfahren.

Eine weitere Aufgabe der vorliegenden Erfindung ist es, eine alternative Vorrichtung zum Ermitteln des Füllstands eines Fluidbehälters, ein alternatives Fluidsystem sowie ein alternatives Verfahren zum Ermitteln des Füllstands eines Fluidbehälters anzugeben.

In einer Ausführungsform löst die vorliegende Erfindung die vorstehend genannten Aufgaben mit einer Vorrichtung zur indirekten Messung des Füllstands einer unter Druck stehenden Flüssigkeit in einem Fluidbehälter, insbesondere in Form eines Flüssiggasbehälters, umfassend
ein Anschlussstück und/oder ein mit dem Anschlussstück verbindbares Leitungsstück, wobei das Anschlussstück und/oder das Leitungsstück mit einem Anschluss des Fluidbehälters verbindbar ist, und mit dem Gas aus dem Fluidbehälter entnehmbar ist, wobei das Anschlussstück und/oder das Leitungsstück einen Fluidkanal aufweist, an oder in dem zumindest ein Temperatursensor zur Messung der Temperatur eines Fluids in dem Fluidkanal angeordnet ist, und
eine Füllstandermittlungseinrichtung, die mit dem Temperatursensor verbunden ist und die ausgebildet ist, beim Entnahmevorgang aus dem Fluidbehälter über eine vorgebbare Zeitspanne den Temperaturverlauf des entnommenen Fluids in dem Fluidkanal mittels des zumindest einen Temperatursensors zu messen und anhand des gemessenen Temperaturverlaufs den Füllstand der Flüssigkeit in dem Fluidbehälter zu ermitteln.

In einer Ausführungsform löst die vorliegende Erfindung die vorstehend genannten Aufgaben mit einem Verfahren zur indirekten Messung des Füllstands einer unter Druck stehenden Flüssigkeit in einem Fluidbehälter, umfassend die Schritte
- Bereitstellen eines Anschlussstücks und/oder eines mit dem Anschlussstück verbundenen Leitungsstücks, mit einem Fluidkanal an oder in dem zumindest ein Temperatursensor zur Messung der Temperatur eines Fluids in dem Fluidkanal angeordnet ist,
- Anschließen des Anschlussstücks und/oder des Leitungsstücks an einen Auslass des Fluidbehälters,
- Entnehmen einer Menge von Gas aus dem Fluidbehälter,
- Ermitteln eines Temperaturverlaufs über eine vorgebbare Zeitspanne des entnommenen Gases mittels des zumindest einen Temperatursensors, und
- Ermitteln des Füllstands der Flüssigkeit in dem Fluidbehälter anhand des gemessenen Temperaturverlaufs.

In einer Ausführungsform löst die vorliegende Erfindung die vorstehend genannten Aufgaben mit einem Fluidsystem, umfassend eine Vorrichtung zur indirekten Messung des Füllstands einer unter Druck stehenden Flüssigkeit in einem Fluidbehälter gemäß einem der Ansprüche 1-8 und einen Fluidbehälter, der mit dem Anschlussstück und/oder dem Leitungsstück der Vorrichtung verbindbar ist.

Einer der damit erzielten Vorteile ist, dass damit auf zuverlässige Weise ein Füllstand in einem Fluidbehälter, insbesondere in Form eines Flüssiggasbehälters, gemessen werden kann. Ein weiterer Vorteil ist, dass der Sensor hierfür nicht direkt an, in oder auf dem Behälter angeordnet werden muss, sondern stromabwärts der Öffnung des Behälters, was eine einfache Austauschbarkeit des Fluidbehälters ermöglicht. Darüber hinaus ist ein Vorteil, dass dadurch die Nutzerzufriedenheit deutlich verbessert wird, insbesondere auf Grund der genaueren Messung und der zuverlässigeren Anzeige des Füllstands des Fluidbehälters.

Der Begriff "Fluid" ist im weitesten Sinne zu verstehen und bezieht sich, insbesondere in den Ansprüchen, vorzugsweise in der Beschreibung auf eine Flüssigkeit, ein Flüssigkeitsgemisch, ein Gas, ein Gasgemisch oder Kombinationen hiervon.

Der Begriff "Kartusche" ist im weitesten Sinne zu verstehen und bezieht sich, insbesondere in den Ansprüchen, vorzugsweise in der Beschreibung auf jegliche Art von Behältnis zur Aufnahme eines oder mehrerer Fluide, welches insbesondere austauschbar angeordnet ist.

Der Begriff "Sanitär" ist im weitesten Sinne zu verstehen und bezieht sich, insbesondere in den Ansprüchen, vorzugsweise in der Beschreibung, allgemein auf den Küchenbereich, den Bad- oder Waschküchenbereich sowie den Heizungsbereich.

Weitere Merkmale, Vorteile und weitere Ausführungsformen der Erfindung sind im Folgenden beschrieben oder werden dadurch offenbar.

Gemäß einer vorteilhaften Weiterbildung der Erfindung ist zumindest ein weiterer, insbesondere zwei weitere, Sensoren, an unterschiedlichen Positionen entlang des Fluidkanals angeordnet. Vorteil hiervon ist, dass eine genauere Messung des Temperaturverlaufs an unterschiedlichen Stellen erfolgen kann, sodass insgesamt die Messgenauigkeit erhöht wird.

Gemäß einer weiteren vorteilhaften Weiterbildung der Erfindung ist das Anschlussstück als Druckminderer ausgebildet. Vorteil hiervon ist, dass ein Nutzer kein zusätzliches Bauteil kaufen und anordnen muss, sondern dass bereits ein integriertes Bauteil, was ein Nutzer üblicherweise verwenden muss, die entsprechenden Sensoren für die Ermittlung des Füllstands aufweist. Damit steigt auch die Nutzerzufriedenheit.

Gemäß einer weiteren vorteilhaften Weiterbildung der Erfindung ist am Eingang und Ausgang des Druckminderers ein Temperatursensor angeordnet. Vorteil hiervon ist, dass auf einfache und gleichzeitig besonders zuverlässige Weise die Ermittlung des Füllstands mittels Sensoren im Druckminderer ermöglicht werden kann, ohne den grundsätzlichen Aufbau des Druckminderers zu ändern.

Gemäß einer weiteren vorteilhaften Weiterbildung der Erfindung ist die Füllstandermittlungseinrichtung ausgebildet, den Füllstand basierend auf einer Entnahmemenge des Fluids zu ermitteln. Einer der damit erzielte Vorteile ist, dass damit eine noch genauere Füllstandermittlung durchgeführt werden kann. Wird eine definierte Entnahmemenge vorgegeben, kann dadurch auf besonders zuverlässige Weise der Temperaturabfall mit der Entnahmemenge einerseits und dem Füllstand andererseits erfolgen, zudem kann gegebenenfalls anhand früherer Entnahmen ein früherer Füllstand ermittelt werden und dann basierend darauf auf den aktuellen Füllstand geschlossen werden.

Gemäß einer weiteren vorteilhaften Weiterbildung der Erfindung ist eine, insbesondere optische, Anzeigeeinrichtung angeordnet, die ausgebildet ist, den Füllstand zumindest in 25%-Schritten, insbesondere zumindest in 20%-Schritten, vorzugsweise zumindest in 10%-Schritten, zwischen 0% und 100%, anzuzeigen, und die mit der Füllstandermittlungseinrichtung, insbesondere drahtlos, verbunden ist. Vorteil hiervon ist eine ausreichende Füllstandanzeige für einen Nutzer, sodass dieser rechtzeitig einen neuen gefüllten Fluidbehälter erwerben kann. Wird eine drahtlose Verbindung eingesetzt, kann auf die Verlegung von Kabeln, etc. weitestgehend verzichtet werden.

Gemäß einer weiteren vorteilhaften Weiterbildung der Erfindung sind zumindest das Anschlussstück und/oder das Leitungsstück aus Kunststoff hergestellt. Vorteil hiervon ist eine kostengünstige Herstellung und eine einfache Integration von einem oder mehreren Temperatursensoren.

Gemäß einer weiteren vorteilhaften Weiterbildung der Erfindung ist ein Fluidbehälterwechsel mittels der Füllstandermittlungseinrichtung detektierbar, insbesondere durch Detektieren eines Druckabfalls am Anschlussstück und/oder Leitungsstück. Vorteil hiervon ist, dass die Ermittlungseinrichtung damit den bisher ermittelten Füllstand automatisch verwirft, und sobald Flüssiggas gezapft wird, diese den Füllstand ermittelt.

Gemäß einer weiteren vorteilhaften Weiterbildung der Erfindung wird zum Ermitteln des Füllstands ein Temperaturabfall innerhalb der vorgebbaren Zeitspanne bestimmt. Dies ermöglicht eine einfache und zuverlässige Ermittlung des Füllstands des Fluidbehälters.

Gemäß einer weiteren vorteilhaften Weiterbildung der Erfindung erfolgt zum Ermitteln des Füllstands ein Vergleich mit vorab ermittelten Vergleichskurven, die unterschiedliche Füllstände repräsentieren. Einer der damit erzielten Vorteile ist, dass auf besonders einfache und zuverlässige Weise der Füllstand ermittelt werden kann.

Gemäß einer weiteren vorteilhaften Weiterbildung der Erfindung wird zum Ermitteln des Füllstands eine Zeit bis zu einem Temperaturabfall von zumindest 0,5 Grad Celsius, insbesondere zumindest 1,0 Grad Celsius, vorzugsweise zumindest 2,0 Grad Celsius, insbesondere zumindest 5,0 Grad Celsius, gemessen seit der begonnenen Entnahme des Gases, bestimmt. Vorteil hiervon ist, dass gegebenenfalls erwärmte Gaspolster entfernt werden können und gleichzeitig ermittelt werden kann, wie lange es bis zu einem signifikanten Temperaturabfall durch die Gasexpansion beim Entnehmen dauert, was eine zusätzliche Information für den bisherigen Füllstand darstellt.

Gemäß einer weiteren vorteilhaften Weiterbildung der Erfindung wird eine Umgebungstemperatur des Fluidbehälters ermittelt, und mittels der ermittelten Umgebungstemperatur der Füllstand ermittelt. Auf diese Weise kann ein gemessener Temperaturverlauf in Relation zur Umgebungstemperatur gesetzt werden, sodass genauer, beispielsweise ein geringer Temperaturabfall bei höherer Umgebungstemperatur ermittelt und dieser kompensiert werden kann beziehungsweise der gemessene Temperaturverlauf auf eine vorgebbare Temperatur normiert werden kann.

Gemäß einer weiteren vorteilhaften Weiterbildung der Erfindung erfolgt das Ermitteln des Temperaturverlaufs erst nach einer vorgebbaren Zeitspanne. Damit kann Energie eingespart werden, sodass noch während des Vorhandenseins eines bereits erwärmten Gaspolsters in dem Anschluss- und/oder Leitungsstück keine Messung erfolgt.

Weitere wichtige Merkmale und Vorteile der Erfindung ergeben sich aus den Unteransprüchen, aus den Zeichnungen und aus der dazugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der vorliegenden Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigt in schematischer Form
- Figur 1: eine Vorrichtung gemäß einer Ausführungsform der vorliegenden Erfindung;
- Figur 2: Schritte eines Verfahrens gemäß einer Ausführungsform der vorliegenden Erfindung; und
- Figur 3: ein Temperatur-Zeitdiagramm erhalten mit einer Vorrichtung gemäß einer Ausführungsform der vorliegenden Erfindung.

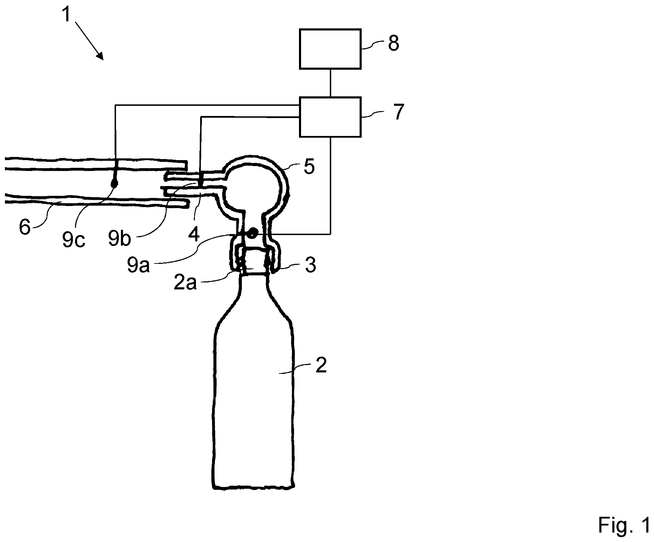

Figur 1 zeigt eine Vorrichtung zur indirekten Messung des Füllstands einer unter Druck stehenden Flüssigkeit in einem Fluidbehälter.

In Figur 1 ist eine Vorrichtung 1 zur indirekten Messung des Füllstands von flüssigen CO₂ in einem Fluidbehälter, insbesondere einer Flüssiggasflasche in Form einer CO₂-Gasflasche 2, gezeigt. Die Gasflasche 2 weist eine Öffnung 2a zur Entnahme von CO₂ auf. Die Öffnung 2a ist mit einem Anschluss 3 eines Druckminderers 5 druckdicht verbunden. Ein Ausgang 4 des Druckminderers 5 ist weiter mit einer Leitung oder Rohr 6 verbunden. Im Bereich des Anschlusses 3, im Bereich des Ausgangs 4 sowie im Bereich des Ausgangs 4 in der Leitung 6 ist jeweils ein Temperaturmesssensor 9a, 9b, 9c angeordnet. Die Temperaturmesssensoren 9a, 9b, 9c sind hierbei mit einer Ermittlungseinrichtung 7, beispielsweise einem Mikroprozessor oder dergleichen, verbunden. Diese kann wiederum eine Anzeigeeinrichtung 8 aufweisen oder mit einer solchen drahtgebunden oder drahtlos verbunden sein, um den von der Ermittlungseinrichtung 7 ermittelten Füllstand, beispielsweise visuell in 10%-Schritten, einem Nutzer anzuzeigen. Die Ermittlungseinrichtung 7 ist eine Füllstandermittlungseinrichtung, die ausgebildet ist, beim Entnahmevorgang aus der CO₂-Gasflasche 2 über eine vorgebbare Zeitspanne den Temperaturverlauf des entnommenen CO₂-Gases in dem oder den Fluidkanälen, hier dem Fluidkanal innerhalb des Druckminderers 5 vom Eingang 3 bis zum Ausgang 4 und in der Leitung 6 mittels der Temperatursensoren 9a, 9b, 9c zu messen und anhand des gemessenen Temperaturverlaufs den Füllstand des flüssigen CO₂ in der CO₂-Gasflasche 2 zu ermitteln.

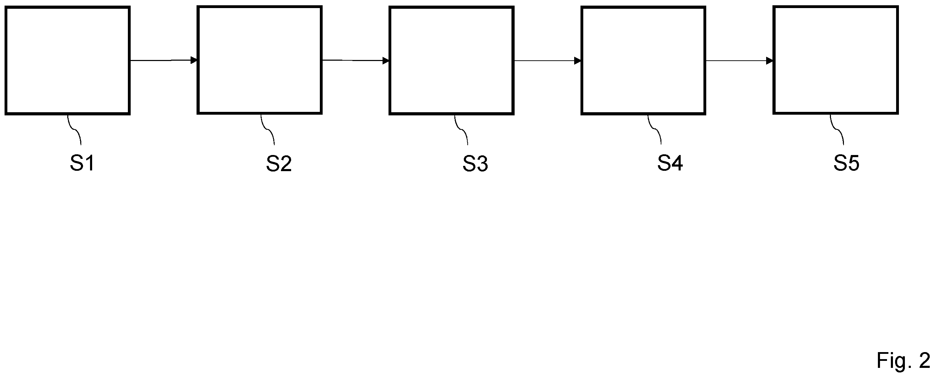

Figur 2 zeigt Schritte eines Verfahrens gemäß einer Ausführungsform der vorliegenden Erfindung.

In Figur 2 sind Schritte eines Verfahrens zur indirekten Messung des Füllstands einer unter Druck stehenden Flüssigkeit in einem Fluidbehälter gezeigt. Das Verfahren umfasst dabei die Schritte
- Bereitstellen S1 eines Anschlussstücks 5 und/oder eines mit dem Anschlussstück 5 verbundenen Leitungsstücks 6, mit einem Fluidkanal an oder in dem zumindest ein Temperatursensor 9a, 9b, 9c zur Messung der Temperatur eines Fluids in dem Fluidkanal angeordnet ist,
- Anschließen S2 des Anschlussstücks 5 und/oder des Leitungsstücks 6 an einen Auslass 3 des Fluidbehälters 2,
- Entnehmen S3 einer Menge von Gas aus dem Fluidbehälter 2,
- Ermitteln S4 eines Temperaturverlaufs über eine vorgebbare Zeitspanne des entnommenen Gases mittels des zumindest einen Temperatursensors 9a, 9b, 9c, und
- Ermitteln S5 des Füllstands der Flüssigkeit in dem Fluidbehälter 2 anhand des gemessenen Temperaturverlaufs.

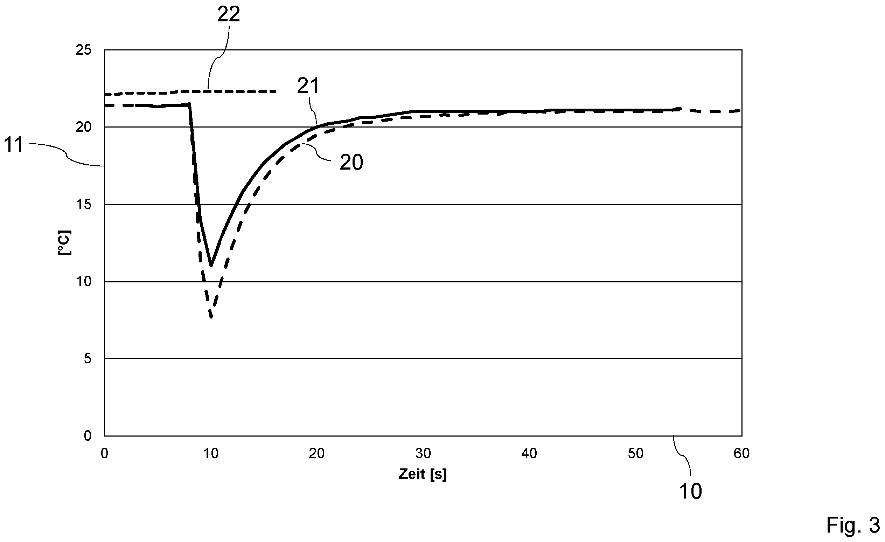

Figur 3 zeigt ein Temperatur-Zeitdiagramm, erhalten mit einer Vorrichtung gemäß einer Ausführungsform der vorliegenden Erfindung.

In Figur 3 ist ein Diagramm gezeigt, welches die gemessene Temperatur 11 in Abhängigkeit der Zeit 10 beim Entnehmen von CO₂ aus einer CO₂-Gasflasche zeigt. Der gemessene Temperaturverlauf der Kurve 20 korrespondiert dabei zu einer etwa 2/3 gefüllten CO₂-Gasflasche, der gemessene Temperaturverlauf der Kurve 21 zu einer circa 1/3 gefüllten CO₂-Gasflasche und der gemessene Temperaturverlauf der Kurve 22 einer nahezu leeren CO₂-Gasflasche.

Der gemessene Temperaturverlauf kann dabei wie folgt erklärt werden. Das unter Druck befindliche Gas in einem Fluidbehälter, beispielsweise einer Druckgasflasche, kühlt sich beim Entnehmen, also bei einem Übergang von der flüssigen zu der gasförmigen Phase, deutlich ab. Um auch bei kleinen Entnahmemengen den Druck detektieren zu können, kann der entsprechende Temperatursensor zur Messung der Temperatur des CO₂-Gases möglichst nahe am Auslass an der Druckgasflasche angeordnet werden. Der Temperatursensor kann zum Beispiel in und/oder direkt nach einem Druckminderer angeordnet werden, wie dies in Figur 1 beschrieben ist. Es kann auch nur ein Temperaturmesssensor angeordnet werden und nicht wie bei bekannten Füllstandermittlungseinrichtungen mehrere an der Druckgasflaschenwandung entlang. Da der Temperatursensor in oder nach dem Druckminderer außerhalb des vom Nutzer zu servicierenden Bereichs ist, ist die Handhabung und Anordnung desselben deutlich weniger fehleranfällig.

Bei jeder Entnahme wechselt eine entsprechende Menge CO₂ von flüssig zu gasförmig. Hierfür wird Energie benötigt, welche zunächst dem Medium, also dem flüssigen CO₂ selbst entnommen wird. Hierdurch kommt es an der Oberfläche des flüssigen CO₂ zu einer Abkühlung. Da flüssiges CO₂ besser Wärme leitet als gasförmiges CO₂, wird die Energie zunächst vor allem dem flüssigen Teil entnommen. Befindet sich noch viel flüssiges CO₂ in der Flasche, so ist nur ein kleines, gasförmiges Polster vorhanden. Die Temperatur am Auslass der CO₂-Gasflasche wird dadurch schnell sinken. Ist nur noch wenig flüssiges CO₂ in der Flasche, ist das CO₂-Gaspolster oberhalb der Flüssig/Gas-Grenze deutlich größer. Bis die Temperatur an der Entnahmestelle sinkt, dauert es dann länger, da allgemein Gas ein schlechter Wärmeleiter ist. Über diesen Unterschied in der Temperaturänderung, insbesondere bei bekannter Entnahmemenge, kann der Füllstand des flüssigen CO₂ in der Gasflasche bestimmt werden.

Hierfür kann zum Beispiel das Maximum der Temperaturänderung (das erreichte Minimum auf den Startwert normiert) oder ein Messpunkt zu einem spezifischen Zeitpunkt in den jeweiligen Kurven 20, 21, 22 verwendet werden Die Umgebungstemperatur spielt - da es sich um eine relative Temperaturmessung handelt - nur insoweit eine Rolle, dass diese über dem Siedepunkt des CO₂-Gases liegen sollte.

Verfahren und Vorrichtungen gemäß Ausführungsformen der Erfindung können bei jeglichen Gasen in Behältern verwendet werden, welche in flüssiger Form in der Flasche vorhanden sind und portions- oder teilweise gasförmig entnommen werden können.

Bei der Kurve 20 ist der Temperaturabfall am größten, da sich hier - verglichen mit den anderen beiden Kurven - noch am meisten flüssiges CO₂ in dem Fluidbehälter befindet. Die Kurve 21 zeigt ebenfalls noch einen starken Abfall der Temperatur, der allerdings nicht so stark ausfällt wie bei der Kurve 20. Bei der Kurve 22 ist nahezu kein flüssiges CO₂ mehr in dem Fluidbehälter vorhanden, sodass kaum noch beziehungsweise keine Abkühlung, sprich kein Temperaturabfall mehr detektiert werden kann.

Zur Ermittlung des Füllstands können nun Vergleiche mit insbesondere auf 0 Grad Celsius normierten Vergleichskurven erfolgen. Diese können auch hinsichtlich unterschiedlicher Entnahmemengen vorgegeben sein. Zur Ermittlung des Füllstands können die Vergleichskurven auch interpoliert werden, um den Füllstand möglichst genau zu ermitteln.

Im Ergebnis kann der Füllstand so insbesondere in 25%-Schritten, 20%-Schritten, 10%-Schritten oder sogar 5%-Schritten für einen Nutzer genau angegeben werden.

Zusammenfassend weist zumindest eine der Ausführungsformen der Erfindung zumindest einen der folgenden Vorteile auf und/oder stellt zumindest eines der folgenden Merkmale bereit:
- Hohe Nutzerzufriedenheit.
- Kostengünstige Herstellung beziehungsweise Durchführung.
- Hohe Flexibilität.
- Einfache und schnelle Messung des Füllstands bei hoher Genauigkeit.
- Hohe Zuverlässigkeit bei der Ermittlung des Füllstands von Gas in Fluidbehältern, insbesondere Druckgasbehältern.

Obwohl die vorliegende Erfindung anhand bevorzugter Ausführungsbeispiele beschrieben wurde, ist sie nicht darauf beschränkt, sondern auf vielfältige Weise modifizierbar.

### Bezugszeichenliste

- 1: Vorrichtung
- 2: CO₂-Gasflasche
- 2a: Entnahmeöffnung
- 3: Anschluss
- 4: Ausgang
- 5: Anschlussstück/Druckminderer
- 6: Leitungsstück
- 7: Füllstandermittlungseinrichtung
- 8: Anzeigeeinrichtung
- 9a, 9b, 9c: Temperaturmesssensor
- 10: Zeit in Sekunden
- 11: Temperatur in °C

- 20: Temperaturverlauf
- 21: Temperaturverlauf
- 22: Temperaturverlauf

- S1-S5: Schritte eines Verfahrens

## Patentansprüche

1. Vorrichtung (1) zur indirekten Messung des Füllstands einer unter Druck stehenden Flüssigkeit in einem Fluidbehälter (2), insbesondere in Form eines Flüssiggasbehälters, umfassend
ein Anschlussstück (5) und/oder ein mit dem Anschlussstück (5) verbindbares Leitungsstück (6), wobei das Anschlussstück (5) und/oder das Leitungsstück (6) mit einem Anschluss des Fluidbehälters (2) verbindbar ist, und mit dem Gas aus dem Fluidbehälter (2) entnehmbar ist, wobei das Anschlussstück (5) und/oder das Leitungsstück (6) einen Fluidkanal aufweist, an oder in dem zumindest ein Temperatursensor (9a, 9b, 9c) zur Messung der Temperatur eines Fluids in dem Fluidkanal angeordnet ist, und
eine Füllstandermittlungseinrichtung (7), die mit dem Temperatursensor (9a, 9b, 9c) verbunden ist und die ausgebildet ist, beim Entnahmevorgang aus dem Fluidbehälter (2) über eine vorgebbare Zeitspanne den Temperaturverlauf (20, 21, 22) des entnommenen Fluids in dem Fluidkanal mittels des zumindest einen Temperatursensors (9a, 9b, 9c) zu messen und anhand des gemessenen Temperaturverlaufs (20, 21, 22) den Füllstand der Flüssigkeit in dem Fluidbehälter (2) zu ermitteln.

2. Vorrichtung (1) gemäß Anspruch 1, **dadurch gekennzeichnet, dass** zumindest ein weiterer, insbesondere zwei weitere, Sensoren (9a, 9b, 9c) an unterschiedlichen Positionen entlang des Fluidkanals angeordnet sind.

3. Vorrichtung (1) gemäß einem der Ansprüche 1-2, **dadurch gekennzeichnet, dass** das Anschlussstück (5) als Druckminderer ausgebildet ist.

4. Vorrichtung (1) gemäß Anspruch 2 und 3, **dadurch gekennzeichnet, dass** am Eingang und Ausgang des Druckminderers ein Temperatursensor (9a, 9b, 9c) angeordnet ist.

5. Vorrichtung (1) gemäß einem der Ansprüche 1-4, **dadurch gekennzeichnet, dass** die Füllstandermittlungseinrichtung (7) ausgebildet ist, den Füllstand basierend auf einer Entnahmemenge des Fluids zu ermitteln.

6. Vorrichtung (1) gemäß einem der Ansprüche 1-5, **dadurch gekennzeichnet, dass** eine, insbesondere optische, Anzeigeeinrichtung (8) angeordnet ist, die ausgebildet ist, den Füllstand zumindest in 25%-Schritten, insbesondere zumindest in 20%-Schritten, vorzugsweise zumindest in 10%-Schritten, zwischen 0% und 100% anzuzeigen, und die mit der Füllstandermittlungseinrichtung (7), insbesondere drahtlos, verbunden ist.

7. Vorrichtung (1) gemäß einem der Ansprüche 1-6, **dadurch gekennzeichnet, dass** zumindest das Anschlussstück (5) und/oder das Leitungsstück (6) aus Kunststoff hergestellt sind.

8. Vorrichtung (1) gemäß einem der Ansprüche 1-7, **dadurch gekennzeichnet, dass** ein Fluidbehälterwechsel mittels der Füllstandermittlungseinrichtung (7) detektierbar ist, insbesondere durch Detektieren eines Druckabfalls am Anschlussstück (5) und/oder Leitungsstück (6).

9. Verfahren zur indirekten Messung des Füllstands einer unter Druck stehenden Flüssigkeit in einem Fluidbehälter (2), umfassend die Schritte
- Bereitstellen (S1) eines Anschlussstücks (5) und/oder eines mit dem Anschlussstück (5) verbundenen Leitungsstücks (6) mit einem Fluidkanal an oder in dem zumindest ein Temperatursensor (9a, 9b, 9c) zur Messung der Temperatur eines Fluids in dem Fluidkanal angeordnet ist,
- Anschließen (S2) des Anschlussstücks (5) und/oder des Leitungsstücks (6) an einen Auslass (3) des Fluidbehälters (2),
- Entnehmen (S3) einer Menge von Gas aus dem Fluidbehälter (2),
- Ermitteln (S4) eines Temperaturverlaufs (20, 21, 22) über eine vorgebbare Zeitspanne des entnommenen Gases mittels des zumindest einen Temperatursensors (9a, 9b, 9c), und
- Ermitteln (S5) des Füllstands der Flüssigkeit in dem Fluidbehälter (2) anhand des gemessenen Temperaturverlaufs (20, 21, 22).

10. Verfahren gemäß Anspruch 9, **dadurch gekennzeichnet, dass** zum Ermitteln (S5) des Füllstands ein Temperaturabfall innerhalb der vorgebbaren Zeitspanne bestimmt wird.

11. Verfahren gemäß einem der Ansprüche 9-10, **dadurch gekennzeichnet, dass** zum Ermitteln (S5) des Füllstands ein Vergleich mit vorab ermittelten Vergleichskurven, die unterschiedliche Füllstände repräsentieren, erfolgt.

12. Verfahren gemäß einem der Ansprüche 9-11, **dadurch gekennzeichnet, dass** zum Ermitteln (S5) des Füllstands eine Zeit bis zu einem Temperaturabfall von zumindest 0,5 Grad Celsius, insbesondere zumindest 1,0 Grad Celsius, vorzugsweise zumindest 2,0 Grad Celsius, insbesondere zumindest 5,0 Grad Celsius, gemessen seit der begonnenen Entnahme des Gases, bestimmt wird.

13. Verfahren gemäß einem der Ansprüche 9-12, **dadurch gekennzeichnet, dass** eine Umgebungstemperatur des Fluidbehälters (2) ermittelt wird, und mittels der ermittelten Umgebungstemperatur der Füllstand ermittelt wird.

14. Verfahren gemäß einem der Ansprüche 9-13, **dadurch gekennzeichnet, dass** das Ermitteln des Temperaturverlaufs (20, 21, 22) erst nach einer vorgebbaren Zeitspanne erfolgt.

15. Fluidsystem, umfassend eine Vorrichtung (1) zur indirekten Messung des Füllstands einer unter Druck stehenden Flüssigkeit in einem Fluidbehälter (2), insbesondere in Form eines Flüssiggasbehälters, gemäß einem der Ansprüche 1-8 und einen Fluidbehälter (2), der mit dem Anschlussstück (5) und/oder dem Leitungsstück (6) der Vorrichtung (1) verbindbar ist.
